# EUROPEAN PATENT SPECIFICATION

(11) **EP 0 704 461 B1**
(45) Date of publication and mention of the grant of the patent: **21.03.2001**
(21) Application number: 95115452.5
(22) Date of filing: 29.09.1995
(51) Int. Cl.: C08F 4/655, C08F 10/00

(54) **Olefin polymerization catalyst and process for olefin polymerization**
Katalysator zur Olefinpolymerisation und Verfahren zur Olefinpolymerisation
Catalyseur pour la polymérisation d'oléfine et procédé pour la polymérisation d'oléfine

(30) Priority: 30.09.1994 JP 23823594
(43) Date of publication of application: 03.04.1996
(73) Proprietor: MITSUI CHEMICALS, INC., Tokyo (JP)
(72) Inventor: Imuta, Junichi, c/o Mitsui Petrochem. Ind., Ltd., Waki-cho, Kuga-gun, Yamaguchi 740 (JP); Matsumoto, Tetsuhiro, c/o Mitsui Petrochem.Ind.Ltd, Waki-cho, Kuga-gun, Yamaguchi 740 (JP)
(74) Representative: Hansen, Bernd, Dr. Dipl.-Chem.

(56) References cited:
- EP-A2- 0 511 665
- EP-A2- 0 598 543
- US-A- 5 296 565
- US-A- 5 308 816

## Description

The present invention relates to an olefin polymerization catalyst and a process for olefin polymerization.

### BACKGROUND OF THE INVENTION

Catalysts comprising metallocene compounds, e.g., zirconocene, and aluminoxane have been conventionally known as catalysts which can prepare olefin polymers with high polymerization activity, and there have been heretofore proposed various processes for preparing olefin polymers using such catalysts.

For example, it is known that use of a stereo-rigid metallocene compound of crosslinked type among various metallocene compounds makes it possible to prepare a stereoregular polyolefin. Japanese Patent Laid-Open Publication No. 163313/1993 discloses a process for preparing a polyolefin, which comprises polymerizing an α-olefin in the presence of a solid catalyst component and a co-catalyst composed of alkylaluminum. This solid catalyst component is a catalyst component in which aluminoxane and a complex of Group IVB metal of the periodic table having at least one cycloalkadienyl group in its one molecule are supported on an inorganic compound. In this publication, a complex wherein two cycloalkadienyl groups are crosslinked by an alkylene group is described as the complex of Group IVB metal of the periodic table. However, the polyolefin obtained by this process has drawbacks of low bulk density and low molecular weight.

There is also known a process in which an organoaluminum oxy-compound (aluminoxane) and an organoaluminum compound are used in combination thereby to save the organoaluminum oxy-compound with keeping the polymerization activity at a high level.

EP-A-0 598 543 discloses a solid catalyst obtainable by supporting an organoaluminum compound and a transition metal compound on an organic porous polymer carrier, and then subjecting the product to preliminary polymerization with an olefin.

Further, it is also known that the polymerization activity can be enhanced by using Lewis acid containing a boron atom or an ionic compound containing a boron atom (generically sometimes referred to as "boron compound" hereinafter) in combination with an organoaluminum compound.

However, the catalysts proposed in the prior art are not always satisfactory in various properties, such as polymerization activity, reduction of the amount of the organoaluminum oxy-compound, bulk density of the resulting polymer, particle properties of the resulting polymer, etc., and therefore the advent of an olefin polymerization catalyst having higher polymerization activity is desired.

The present inventors have studied in view of such circumstances as mentioned above and obtained the following finding. That is, by the use of a catalyst obtained by prepolymerizing an olefin in the presence of a solid catalyst component and an organoaluminum compound and/or Lewis acid or an ionic compound containing a boron atom, said solid catalyst component being obtained by allowing a fine particle carrier to support both of an organoaluminum compound and a transition metal compound which has a ligand of such a structure that two groups each having an indenyl skeleton are crosslinked by a (substituted) silylene group, polyolefin of high molecular weight can be prepared with high polymerization activity, and moreover polyolefin of uniform particle sizes, i.e., polyolefin of high bulk density, can be prepared. Based on this finding, the present invention has been accomplished.

### OBJECT OF THE INVENTION

It is an object of the invention to provide an olefin polymerization catalyst and a process for olefin polymerization, by which the amount of an organoaluminum oxy-compound can be reduced, polyolefin of high molecular weight can be prepared with high polymerization activity, and moreover polyolefin of high bulk density can be obtained.

### SUMMARY OF THE INVENTION

The olefin polymerization catalyst according to the invention is an olefin polymerization catalyst obtained by prepolymerizing an olefin in the presence of:
(A) a solid catalyst component obtained by allowing a fine particle carrier to support first an organoaluminum oxy-compound and then a transition metal compound represented by the following formula (I), and
(B) (b-1) an organoaluminum compound and/or (b-2) Lewis acid containing a boron atom or an ionic compound containing a boron atom; 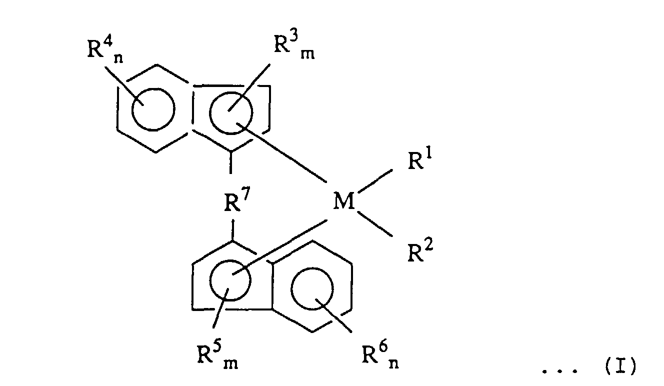
wherein M is a transition metal of Group IVB of the periodic table;
R¹ and R² are each a group or an atom selected from a hydrocarbon group of 1 to 10 carbon atoms, an alkoxy group of 1 to 10 carbon atoms, an aryloxy group of 6 to 10 carbon atoms, -OSO₂R⁸, -SO₂R⁸, -CH₂SiR⁸₃ (R⁸ is a hydrocarbon group which may have a substituent), a hydrogen atom and a halogen atom, and may be the same as or different from each other;
R³ and R⁵ are each a group selected from a hydrocarbon group of 1 to 10 carbon atoms and a trialkylsilyl group whose alkyl group has 1 to 10 carbon atoms, and may be the same as or different from each other, and m is 1 or 2;
R⁴ and R⁶ are each a group selected from a hydrocarbon group of 1 to 10 carbon atoms, a trialkylsilyl group whose alkyl group has 1 to 10 carbon atoms and an aryl group of 6 to 16 carbon atoms which may be substituted with a hydrocarbon group of 1 to 20 carbon atoms, a halogenated hydrocarbon group of 1 to 20 carbon atoms, a trialkylsilyl group or a halogen atom, n is 0 or an integer of 1 to 4, and when n is an integer of 2 to 4, plural different R⁴ and/or plural different R⁶, which are bonded to adjacent carbon atoms, may be bonded to each other to form a ring together with the carbon atoms; and
R⁷ is a group selected from a silylene group, a substituted silylene group, -GeR⁹₂- and PR⁹- (R⁹ is a hydrocarbon group).

The process for olefin polymerization according to the present invention comprises polymerizing or copolymerizing an olefin in the presence of the above-mentioned olefin polymerization catalyst.

According to the olefin polymerization catalyst and the process for olefin polymerization of the invention, even if the amount of the organoaluminum oxy-compound is reduced, an olefin can be polymerized with high polymerization activity and a polyolefin of high bulk density can be obtained.

### BRIEF DESCRIPTION OF THE DRAWING

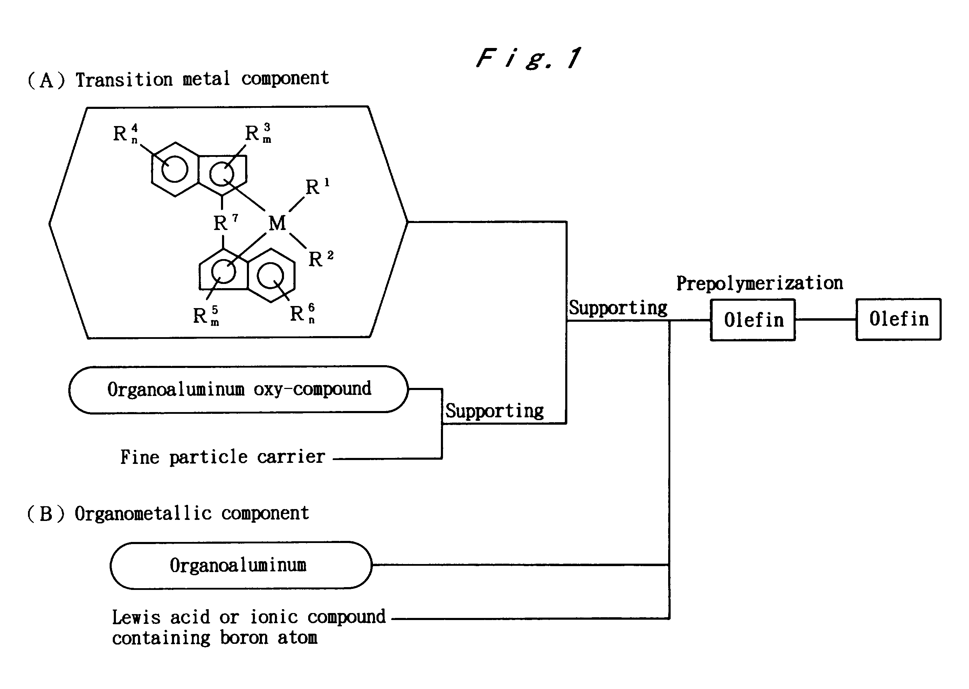

Fig. 1 is an explanatory view showing steps of a process for preparing an olefin polymerization catalyst according to the invention.

### DETAILED DESCRIPTION OF THE INVENTION

The olefin polymerization catalyst and the process for olefin polymerization according to the invention will be described in detail hereinafter.

The meaning of the term "polymerization" used herein is not limited to "homopolymerization" but may comprehend "copolymerization". Also, the meaning of the term "polymer" used herein is not limited to "homopolymer" but may comprehend "copolymer".

The olefin polymerization catalyst according to the invention is an olefin polymerization catalyst obtained by prepolymerizing an olefin in the presence of:
(A) a solid catalyst component obtained by allowing a fine particle carrier to support first an organoaluminum oxy-compound and then a transition metal compound represented by the formula (I) described below, and
(B) (b-1) an organoaluminum compound and/or (b-2) Lewis acid containing a boron atom or an ionic compound containing a boron atom.

First, the components for forming the olefin polymerization catalyst of the invention are described.

The transition metal compound for forming the solid catalyst component (A) is a compound represented by the following formula (I).

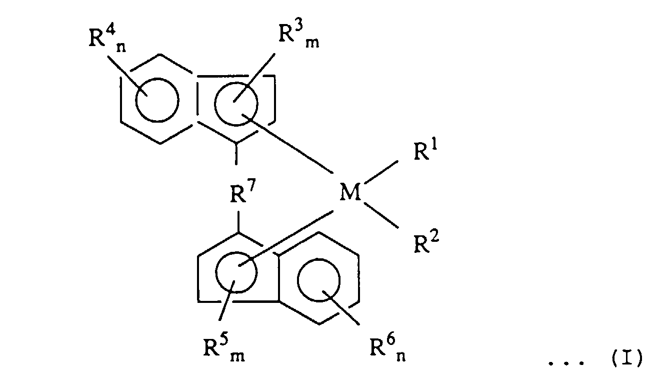

In the formula (I), M is a transition metal of Group IVB of the periodic table, specifically zirconium, hafnium or titanium, preferably zirconium.

R¹ and R² are each a group or an atom selected from a hydrocarbon group of 1 to 10 carbon atoms, an alkoxy group of 1 to 10 carbon atoms, an aryloxy group of 6 to 10 carbon atoms, -OSO₂R⁸, -SO₂R⁸, -CH₂SiR⁸₃ (R⁸ is a hydrocarbon group which may have a substituent), a hydrogen atom and a halogen atom, and R¹ and R² may be the same as or different from each other.

Examples of the hydrocarbon groups of 1 to 10 carbon atoms include alkyl groups, such as methyl, ethyl, n-propyl, isopropyl, n-butyl, isobutyl, pentyl and neopentyl; cycloalkyl groups, such as cyclopentyl and cyclohexyl; aryl groups, such as phenyl, tolyl and mesityl; and aralkyl groups, such as benzyl and neophyl. These groups may be substituted with halogen atoms or silicon-containing groups.

Examples of the alkoxy groups of 1 to 10 carbon atoms include methoxy, ethoxy, propoxy and butoxy.

Examples of the aryloxy groups of 6 to 10 carbon atoms include phenoxy.

Examples of the groups represented by the formula -OSO₂R⁸ include phenylsulfonato, benzylsulfonato, methylsulfonato, p-toluenesulfonato, mesitylsulfonato and trifluoromethanesulfonato.

Examples of the groups represented by the formula -SO₂R⁸ include phenylsulfinato.

Examples of the groups represented by the formula -CH₂SiR⁸₃ include trimethylsilylmethyl.

Examples of the halogen atoms include fluorine, chlorine, bromine and iodine.

Of these, R¹ and R² are each preferably a hydrocarbon group of 1 to 10 carbons atoms or a halogen atom, particularly preferably a halogen atom.

R³ and R⁵ are each a group selected from a hydrocarbon group of 1 to 10 carbon atoms and a trialkylsilyl group whose alkyl group has 1 to 10 carbon atoms, and R³ and R⁵ may be the same as or different from each other.

Examples of the hydrocarbon groups of 1 to 10 carbon atoms include alkyl groups, such as methyl, ethyl, n-propyl, isopropyl, n-butyl, sec-butyl, tert-butyl, isobutyl, pentyl and neopentyl; cycloalkyl groups, such as cyclopentyl and cyclohexyl; aryl groups, such as phenyl and tolyl; and aralkyl groups, such as benzyl and neophyl.

Examples of the trialkylsilyl groups include trimethylsilyl and triethylsilyl.

Of these, R³ and R⁵ are each preferably a hydrocarbon group of 1 to 10 carbon atoms, particularly preferably an alkyl group.

m is 1 or 2, preferably 1.

R⁴ and R⁶ are each a group selected from a hydrocarbon group of 1 to 10 carbon atoms, a trialkylsilyl group whose alkyl group has 1 to 10 carbon atoms and an aryl group of 6 to 16 carbon atoms.

Examples of the hydrocarbon groups of 1 to 10 carbon atoms include, alkyl groups, such as methyl, ethyl, n-propyl, isopropyl, n-butyl, isobutyl, sec-butyl and tert-butyl; cycloalkyl groups, such as cyclopentyl and cyclohexyl; and aralkyl groups such as benzyl, phenylethyl, phenyldimethylmethyl and neophyl.

Examples of the trialkylsilyl groups include trimethylsilyl and triethylsilyl.

Examples of the aryl groups of 6 to 16 carbon atoms include phenyl, biphenylyl, tolyl, naphthyl, anthryl, phenanthryl and acenaphthenyl. The aryl group may be substituted with a hydrocarbon group of 1 to 20 carbon atoms, a halogenated hydrocarbon group of 1 to 20 carbon atoms, a trialkylsilyl group or a halogen atom.

Of these, R⁴ and R⁶ are each preferably a hydrocarbon group of 1 to 10 carbon atoms or an aryl group of 6 to 16 carbon atoms.

n is 0 or an integer of 1 to 4, preferably 1 or 2. When n is an integer of 2 to 4, plural different R⁴ and/or plural different R⁶, which are bonded to adjacent carbon atoms, may be bonded to each other to form a ring together with the carbon atoms.

R⁷ is a bond group selected from a silylene group, a substituted silylene group, -GeR⁹₂- and PR⁹- (R⁹ is a hydrocarbon group).

Examples of the substituted silylene groups include dimethylsilylene, diethylsilylene, di(i-propyl)silylene, di (n-butyl) silylene, di (cyclohexyl) silylene, diphenylsilylene, di (p-chlorophenyl)silylene, di(p-tolyl)silylene and methylphenylsilylene.

Examples of the groups represented by the formula -GeR⁹₂- include dimethylgermyl.

Listed below are examples of the transition metal compounds represented by the above formula (I).
rac-Dimethylsilylene-bis{1-(2,4,7-trimethylindenyl)}zirconium dichloride,
rac-Dimethylsilylene-bis{1-(2,4,6-trimethylindenyl)}zirconium dichloride,
rac-Dimethylsilylene-bis{1-(2,5,6-trimethylindenyl)}zirconium dichloride,
rac-Dimethylsilylene-bis{1-(2,4,5,6-tetramethylindenyl)}zirconium dichloride,
rac-Dimethylsilylene-bis{1-(2,4,5,6,7-pentamethylindenyl)}zirconium dichloride,
rac-Dimethylsilylene-bis{1-(2-methyl-4-n-propyl-7-methylindenyl)}zirconium dichloride,
rac-Dimethylsilylene-bis{1-(4-i-propyl-7-methylindenyl)}zirconium dichloride,
rac-Dimethylsilylene-bis{1-(2-methyl-4-i-propyl-7-methylindenyl)}zirconium dichloride,
rac-Dimethylsilylene-bis{1-(2-methyl-4-i-propyl-6-methylindenyl)}zirconium dichloride,
rac-Dimethylsilylene-bis{1-(2-methyl-4-methyl-6-i-propylindenyl)}zirconium dichloride,
rac-Dimethylsilylene-bis{1-(2-methyl-4-i-propyl-5-methylindenyl)}zirconium dichloride,
rac-Dimethylsilylene-bis{1-(2-methyl-4, 6-di(i-propyl)indenyl)}zirconium dichloride,
rac-Dimethylsilylene-bis{1-(2-methyl-4,6-di(i-propyl)7-methylindenyl)}zirconium dichloride,
rac-Dimethylsilylene-bis{1-(2-methyl-4-i-butyl-7-methylindenyl)}zirconium dichloride,
rac-Dimethylsilylene-bis{1-(2-methyl-4-sec-butyl-7-methylindenyl)}zirconium dichloride,
rac-Dimethylsilylene-bis{1-(2-methyl-4,6-di(sec-butyl)indenyl)}zirconium dichloride,
rac-Dimethylsilylene-bis{1-(2-methyl-4-tert-butyl-7-methylindenyl)}zirconium dichloride,
rac-Dimethylsilylene-bis{1-(2-methyl-4-cyclohexyl-7-methylindenyl)}zirconium dichloride,
rac-Dimethylsilylene-bis{1-(2-methyl-4-benzyl-7-methylindenyl)}zirconium dichloride,
rac-Dimethylsilylene-bis{1-(2-methyl-4-phenylethyl-7-methylindenyl)}zirconium dichloride,
rac-Dimethylsilylene-bis{1-(2-methyl-4-phenyldimethylmethyl-7-methylindenyl)}zirconium dichloride,
rac-Dimethylsilylene-bis{1-(2-methyl-4-chloromethyl-7-methylindenyl)}zirconium dichloride,
rac-Dimethylsilylene-bis{1-(2-methyl-4-trimethylsilylmethyl-7-methylindenyl)}zirconium dichloride,
rac-Dimethylsilylene-bis{1-(2-methyl-4-trimethylsiloxymethyl-7-methylindenyl)}zirconium dichloride,
rac-Diethylsilylene-bis{1-(2-methyl-4-i-propyl-7-methylindenyl)}zirconium dichloride,
rac-Di(i-propyl)silylene-bis{1-(2-methyl-4-i-propyl-7-methylindenyl)}zirconium dichloride,
rac-Di(n-butyl)silylene-bis{1-(2-methyl-4-i-propyl-7-methylindenyl)}zirconium dichloride,
rac-Di(cyclohexyl)silylene-bis{1-(2-methyl-4-i-propyl-7-methylindenyl)}zirconium dichloride,
rac-Methylphenylsilylene-bis{1-(2-methyl-4-i-propyl-7-methylindenyl)}zirconium dichloride,
rac-Diphenylsilylene-bis{1-(2-methyl-4-i-propyl-7-methylindenyl)}zirconium dichloride,
rac-Diphenylsilylene-bis{1-(2-methyl-4-i-propylindenyl)}zirconium dichloride,
rac-Di(p-tolyl)silylene-bis{1-(2-methyl-4-i-propyl-7-methylindenyl)}zirconium dichloride,
rac-Di(p-chlorophenyl)silylene-bis{1-(2-methyl-4-i-propyl-7-methylindenyl)}zirconium dichloride,
rac-Dimethylsilylene-bis{1-(2-methyl-4-i-propyl-7-methylindenyl)}zirconium dibromide,
rac-Dimethylsilylene-bis{1-(2-methyl-4-i-propyl-7-methylindenyl)}zirconium dimethyl,
rac-Dimethylsilylene-bis{1-(2-methyl-4-i-propyl-7-methylindenyl)}zirconium methylchloride,
rac-Dimethylsilylene-bis{1-(2-methyl-4-i-propyl-7-methylindenyl)}zirconium-bis(methanesulfonato),
rac-Dimethylsilylene-bis{1-(2-methyl-4-i-propyl-7-methylindenyl)}zirconium-bis(p-phenylsulfinato),
rac-Dimethylsilylene-bis{1-(2-methyl-3-methyl-4-i-propyl-6-methylindenyl)}zirconium dichloride,
rac-Dimethylsilylene-bis{1-(2-ethyl-4-i-propyl-6-methylindenyl)}zirconium dichloride,
rac-Dimethylsilylene-bis{1-(2-phenyl-4-i-propyl-6-methylindenyl)}zirconium dichloride,
rac-Dimethylsilylene-bis{1-(2-methyl-4-i-propyl-6-methylindenyl)}titanium dichloride,
rac-Dimethylsilylene-bis{1-(2-methyl-4-i-propyl-6-methylindenyl)}hafnium dichloride,
rac-Dimethylsilylene-bis{1-(2-methyl-α-acenaphthoindenyl)}zirconium dichloride,
rac-Dimethylsilylene-bis{1-(2-methyl-4,5-benzoindenyl)}zirconium dichloride,
rac-Dimethylsilylene-bis{1-(2-methyl-4-phenylindenyl)}zirconium dichloride,
rac-Dimethylsilylene-bis{1-(2,7-dimethyl-4-phenylindenyl)}zirconium dichloride,
rac-Dimethylsilylene-bis{1-(2-methyl-4-(α-naphthyl)indenyl)}zirconium dichloride,
rac-Dimethylsilylene-bis{1-(2-methyl-4-(β-naphthyl)indenyl)}zirconium dichloride,
rac-Dimethylsilylene-bis{1-(2-methyl-4-(1-anthryl)indenyl)}zirconium dichloride,
rac-Dimethylsilylene-bis{1-(2-methyl-4-(2-anthryl)indenyl)}zirconium dichloride,
rac-Dimethylsilylene-bis{1-(2-methyl-4-(9-anthryl)indenyl)}zirconium dichloride,
rac-Dimethylsilylene-bis{1-(2-methyl-4-(9-phenanthryl)indenyl)}zirconium dichloride,
rac-Dimethylsilylene-bis{1-(2-methyl-4-(p-fluorophenyl)indenyl)}zirconium dichloride,
rac-Dimethylsilylene-bis{1-(2-methyl-4-(pentafluorophenyl)indenyl)}zirconium dichloride,
rac-Dimethylsilylene-bis{1-(2-methyl-4-(p-chlorophenyl)indenyl)}zirconium dichloride,
rac-Dimethylsilylene-bis{1-(2-methyl-4-(m-chlorophenyl)indenyl)}zirconium dichloride,
rac-Dimethylsilylene-bis{1-(2-methyl-4-(o-chlorophenyl)indenyl)}zirconium dichloride,
rac-Dimethylsilylene-bis{1-(2-methyl-4-(o,o'-dichlorophenyl)phenylindenyl)}zirconium dichloride,
rac-Dimethylsilylene-bis{1-(2-methyl-4-(p-bromophenyl)indenyl)}zirconium dichloride,
rac-Dimethylsilylene-bis{1-(2-methyl-4-(p-tolyl)indenyl)}zirconium dichloride,
rac-Dimethylsilylene-bis{1-(2-methyl-4-(m-tolyl)indenyl)}zirconium dichloride,
rac-Dimethylsilylene-bis{1-(2-methyl-4-(o-tolyl)indenyl)}zirconium dichloride,
rac-Dimethylsilylene-bis{1-(2-methyl-4-(o,o'-dimethylphenyl)indenyl)}zirconium dichloride,
rac-Dimethylsilylene-bis{1-(2-methyl-4-(p-ethylphenyl)indenyl)}zirconium dichloride,
rac-Dimethylsilylene-bis{1-(2-methyl-4- (p-i-propylphenyl)indenyl)}zirconium dichloride,
rac-Dimethylsilylene-bis{1-(2-methyl-4-(p-benzylphenyl)indenyl)}zirconium dichloride,
rac-Dimethylsilylene-bis{1-(2-methyl-4-(p-biphenylyl)indenyl)}zirconium dichloride,
rac-Dimethylsilylene-bis{1-(2-methyl-4-(m-biphenylyl)indenyl)}zirconium dichloride,
rac-Dimethylsilylene-bis{1-(2-methyl-4-(p-trimethylsilylphenyl)indenyl)}zirconium dichloride,
rac-Dimethylsilylene-bis{1-(2-methyl-4-(m-trimethylsilylphenyl)indenyl)}zirconium dichloride,
rac-Dimethylsilylene-bis{1-(2-ethyl-4-phenylindenyl)}zirconium dichloride,
rac-Diphenylsilylene-bis{1-(2-ethyl-4-phenylindenyl)}zirconium dichloride,
rac-Dimethylsilylene-bis{1-(2-phenyl-4-phenylindenyl)}zirconium dichloride,
rac-Dimethylsilylene-bis{1-(2-n-propyl-4-phenylindenyl)}zirconium dichloride,
rac-Diethylsilylene-bis{1-(2-methyl-4-phenylindenyl)}zirconium dichloride,
rac-Di(i-propyl)silylene-bis{1-(2-methyl-4-phenylindenyl)}zirconium dichloride,
rac-Di(n-butyl)silylene-bis{1-(2-methyl-4-phenylindenyl)}zirconium dichloride,
rac-Dicyclohexylsilylene-bis{1-(2-methyl-4-phenylindenyl)}zirconium dichloride,
rac-Methylphenylsilylene-bis{1-(2-methyl-4-phenylindenyl)}zirconium dichloride,
rac-Diphenylsilylene-bis{1-(2-methyl-4-phenylindenyl)}zirconium dichloride,
rac-Di(p-tolyl)silylene-bis{1-(2-methyl-4-phenylindenyl)}zirconium dichloride,
rac-Di(p-chlorophenyl)silylene-bis{1-(2-methyl-4-phenylindenyl)}zirconium dichloride,
rac-Dimethylgermyl-bis{1-(2-methyl-4-phenylindenyl)}zirconium dichloride,
rac-Dimethylsilylene-bis{1-(2-methyl-4-phenylindenyl)}zirconium dibromide,
rac-Dimethylsilylene-bis{1-(2-methyl-4-phenylindenyl)}zirconium dimethyl,
rac-Dimethylsilylene-bis{1-(2-methyl-4-phenylindenyl)}zirconium methylchloride,
rac-Dimethylsilylene-bis{1-(2-methyl-4-phenylindenyl)}zirconium chloride SO₂Me,
rac-Dimethylsilylene-bis{1-(2-methyl-4-phenylindenyl)}zirconium chloride SO₃Me,
rac-Dimethylsilylene-bis{1-(2-methyl-4-phenylindenyl)}titanium dichloride,
rac-Dimethylsilylene-bis{1-(2-methyl-4-phenylindenyl)}hafnium dichloride,
rac-Dimethylsilylene-bis{1-(2-ethyl-4-phenylindenyl)}zirconium dichloride,
rac-Dimethylsilylene-bis{1-(2-ethyl-4-(α-naphthyl)indenyl)}zirconium dichloride,
rac-Dimethylsilylene-bis{1-(2-ethyl-4-(β-naphthyl)indenyl)}zirconium dichloride,
rac-Dimethylsilylene-bis{1-(2-ethyl-4-(2-methyl-1-naphthyl)indenyl)}zirconium dichloride,
rac-Dimethylsilylene-bis{1-(2-ethyl-4-(5-acenaphthenyl)indenyl)}zirconium dichloride,
rac-Dimethylsilylene-bis{1-(2-ethyl-4-(9-anthryl)indenyl)}zirconium dichloride,
rac-Dimethylsilylene-bis{1-(2-ethyl-4-(9-phenanthryl)indenyl)}zirconium dichloride,
rac-Dimethylsilylene-bis{1-(2-ethyl-4-(o-methylphenyl)indenyl)}zirconium dichloride,
rac-Dimethylsilylene-bis{1-(2-ethyl-4-(m-methylphenyl)indenyl)}zirconium dichloride,
rac-Dimethylsilylene-bis{1-(2-ethyl-4-(p-methylphenyl)indenyl)}zirconium dichloride,
rac-Dimethylsilylene-bis{1-(2-ethyl-4-(2,3-dimethylphenyl)indenyl)}zirconium dichloride,
rac-Dimethylsilylene-bis{1-(2-ethyl-4-(2,4-dimethylphenyl)indenyl)}zirconium dichloride,
rac-Dimethylsilylene-bis{1-(2-ethyl-4- (2,5-dimethylphenyl)indenyl)}zirconium dichloride,
rac-Dimethylsilylene-bis{1-(2-ethyl-4-(2,4,6-trimethylphenyl)indenyl)}zirconium dichloride,
rac-Dimethylsilylene-bis{1-(2-ethyl-4-(o-chlorophenyl)indenyl)}zirconium dichloride,
rac-Dimethylsilylene-bis{1-(2-ethyl-4-(m-chlorophenyl)indenyl)}zirconium dichloride,
rac-Dimethylsilylene-bis{1-(2-ethyl-4-(p-chlorophenyl)indenyl)}zirconium dichloride,
rac-Dimethylsilylene-bis{1-(2-ethyl-4-(2,3-dichlorophenyl)indenyl)}zirconium dichloride,
rac-Dimethylsilylene-bis{1-(2-ethyl-4-(2,6-dichlorophenyl)indenyl)}zirconium dichloride,
rac-Dimethylsilylene-bis{1-(2-ethyl-4-(3,5-dichlorophenyl)indenyl)}zirconium dichloride,
rac-Dimethylsilylene-bis{1-(2-ethyl-4-(2-bromophenyl)indenyl)}zirconium dichloride,
rac-Dimethylsilylene-bis{1-(2-ethyl-4-(3-bromophenyl)indenyl)}zirconium dichloride,
rac-Dimethylsilylene-bis{1-(2-ethyl-4-(4-bromophenyl)indenyl)}zirconium dichloride,
rac-Dimethylsilylene-bis{1-(2-ethyl-4-(4-biphenylyl)indenyl)}zirconium dichloride,
rac-Dimethylsilylene-bis{1-(2-ethyl-4-(p-trimethylsilylphenyl)indenyl)}zirconium dichloride,
rac-Dimethylsilylene-bis{1-(2-n-propyl-4-phenylindenyl)}zirconium dichloride,
rac-Dimethylsilylene-bis{1-(2-n-propyl-4-(α-naphthyl)indenyl)}zirconium dichloride,
rac-Dimethylsilylene-bis{1-(2-n-propyl-4-(β-naphthyl)indenyl)}zirconium dichloride,
rac-Dimethylsilylene-bis{1-(2-n-propyl-4-(2-methyl-1-naphthyl)indenyl)}zirconium dichloride,
rac-Dimethylsilylene-bis{1-(2-n-propyl-4-(5-acenaphthyl)indenyl)}zirconium dichloride,
rac-Dimethylsilylene-bis{1-(2-n-propyl-4-(9-anthryl)indenyl)}zirconium dichloride,
rac-Dimethylsilylene-bis{1-(2-n-propyl-4-(9-phenanthryl)indenyl)}zirconium dichloride,
rac-Dimethylsilylene-bis{1-(2-i-propyl-4-phenylindenyl)}zirconium dichloride,
rac-Dimethylsilylene-bis{1-(2-i-propyl-4-(α-naphthyl)indenyl)}zirconium dichloride,
rac-Dimethylsilylene-bis{1-(2-i-propyl-4-(β-naphthyl)indenyl)}zirconium dichloride,
rac-Dimethylsilylene-bis{1-(2-i-propyl-4-(8-methyl-9-naphthyl)indenyl)}zirconium dichloride,
rac-Dimethylsilylene-bis{1-(2-i-propyl-4-(5-acenaphthyl)indenyl)}zirconium dichloride,
rac-Dimethylsilylene-bis{1-(2-i-propyl-4-(9-anthryl)indenyl)}zirconium dichloride,
rac-Dimethylsilylene-bis{1-(2-i-propyl-4-(9-phenanthryl)indenyl)}zirconium dichloride,
rac-Dimethylsilylene-bis{1-(2-s-butyl-4-phenylindenyl)}zirconium dichloride,
rac-Dimethylsilylene-bis{1-(2-s-butyl-4-(α-naphthyl)indenyl)}zirconium dichloride,
rac-Dimethylsilylene-bis{1-(2-s-butyl-4-(β-naphthyl)indenyl)}zirconium dichloride,
rac-Dimethylsilylene-bis{1-(2-s-butyl-4-(2-methyl-1-naphthyl)indenyl)}zirconium dichloride,
rac-Dimethylsilylene-bis{1-(2-s-butyl-4-(5-acenaphthyl)indenyl)}zirconium dichloride,
rac-Dimethylsilylene-bis{1-(2-s-butyl-4-(9-anthryl)indenyl)}zirconium dichloride,
rac-Dimethylsilylene-bis{1-(2-s-butyl-4-(9-phenanthryl)indenyl)}zirconium dichloride,
rac-Dimethylsilylene-bis{1-(2-n-pentyl-4-phenylindenyl)}zirconium dichloride,
rac-Dimethylsilylene-bis{1-(2-n-pentyl-4-(α-naphthyl)indenyl)}zirconium dichloride,
rac-Dimethylsilylene-bis{1-(2-n-butyl-4-phenylindenyl)}zirconium dichloride,
rac-Dimethylsilylene-bis{1-(2-n-butyl-4-(α-naphthyl)indenyl)}zirconium dichloride,
rac-Dimethylsilylene-bis{1-(2-n-butyl-4-(β-naphthyl)indenyl)}zirconium dichloride,
rac-Dimethylsilylene-bis{1-(2-n-butyl-4-(2-methyl-1-naphthyl)indenyl)}zirconium dichloride,
rac-Dimethylsilylene-bis{1- (2-n-butyl-4-(5-acenaphthyl)indenyl)}zirconium dichloride,
rac-Dimethylsilylene-bis{1-(2-n-butyl-4-(9-anthryl)indenyl)}zirconium dichloride,
rac-Dimethylsilylene-bis{1-(2-n-butyl-4-(9-phenanthryl)indenyl)}zirconium dichloride,
rac-Dimethylsilylene-bis{1-(2-i-butyl-4-phenylindenyl)}zirconium dichloride,
rac-Dimethylsilylene-bis{1-(2-i-butyl-4-(α-naphthyl)indenyl)}zirconium dichloride,
rac-Dimethylsilylene-bis{1-(2-i-butyl-4-(β-naphthyl)indenyl)}zirconium dichloride,
rac-Dimethylsilylene-bis{1-(2-i-butyl-4-(2-methyl-1-naphthyl)indenyl)}zirconium dichloride,
rac-Dimethylsilylene-bis{1-(2-i-butyl-4-(5-acenaphthyl)indenyl)}zirconium dichloride,
rac-Dimethylsilylene-bis{1-(2-i-butyl-4-(9-anthryl)indenyl)}zirconium dichloride,
rac-Dimethylsilylene-bis{1-(2-i-butyl-4-(9-phenanthryl)indenyl)}zirconium dichloride,
rac-Dimethylsilylene-bis{1-(2-neopentyl-4-phenylindenyl)}zirconium dichloride,
rac-Dimethylsilylene-bis{1-(2-neopentyl-4-(α-naphthyl)indenyl)}zirconium dichloride,
rac-Dimethylsilylene-bis{1-(2-n-hexyl-4-phenylindenyl)}zirconium dichloride,
rac-Dimethylsilylene-bis{1-(2-n-hexyl-4-(α-naphthyl)indenyl)}zirconium dichloride,
rac-Methylphenylsilylene-bis{1-(2-ethyl-4-phenylindenyl)}zirconium dichloride,
rac-Methylphenylsilylene-bis{1-(2-ethyl-4-(α-naphthyl)indenyl)}zirconium dichloride,
rac-Methylphenylsilylene-bis{1-(2-ethyl-4-(9-anthryl)indenyl)}zirconium dichloride,
rac-Methylphenylsilylene-bis{1-(2-ethyl-4-(9-phenanthryl)indenyl)}zirconium dichloride,
rac-Diphenylsilylene-bis{1-(2-ethyl-4-phenylindenyl)}zirconium dichloride,
rac-Diphenylsilylene-bis{1-(2-ethyl-4-(α-naphthyl)indenyl)}zirconium dichloride,
rac-Diphenylsilylene-bis{1-(2-ethyl-4-(9-anthryl)indenyl)}zirconium dichloride,
rac-Diphenylsilylene-bis{1-(2-ethyl-4-(9-phenanthryl)indenyl)}zirconium dichloride,
rac-Diphenylsilylene-bis{1-(2-ethyl-4-(4-biphenylyl)indenyl)}zirconium dichloride,
rac-Dimethylgermyl-bis{1-(2-ethyl-4-phenylindenyl)}zirconium dichloride,
rac-Dimethylgermyl-bis{1-(2-ethyl-4-(α-naphthyl)indenyl)}zirconium dichloride, and
rac-Dimethylgermyl-bis{1-(2-n-propyl-4-phenylindenyl)}zirconium dichloride.

Also employable in the invention are compounds wherein zirconium is replaced with titanium or hafnium in the compounds listed above.

These novel transition metal compounds used in the invention can be prepared in accordance with "Journal of Organometallic Chem." 288(1985), pp. 63-67, and European Patent Publication No. 0,320,762 (specification and examples).

The organoaluminum oxy-compound for forming the solid catalyst component (A) may be aluminoxane conventionally known or may be such a benzene-insoluble organoaluminum oxy-compound as exemplified in Japanese Patent Laid-Open Publication No. 78687/1990.

The conventionally known aluminoxane can be prepared by, for example, the following procedures.
(1) A procedure of adding an organoaluminum compound such as trialkylaluminum to a hydrocarbon medium suspension of compounds containing adsorbed water or salts containing water of crystallization, e.g., magnesium chloride hydrate, copper sulfate hydrate, aluminum sulfate hydrate, nickel sulfate hydrate and cerous chloride hydrate, so as to allow the organoaluminum compound to react with the adsorbed water or the water of crystallization.
(2) A procedure of allowing water, ice or water vapor to directly act on an organoaluminum compound such as trialkylaluminum in a medium such as benzene, toluene, ethyl ether or tetrahydrofuran.
(3) A procedure of allowing organotin oxide such as dimethyltin oxide or dibutyltin oxide to react with an organoaluminum compound such as trialkylaluminum in a medium such as decane, benzene or toluene.

The aluminoxane may contain a small amount of an organometallic component. Further, it is possible that the solvent or the unreacted organoaluminum compound is distilled off from the solution after recovery of aluminoxane and the remainder is redissolved in a solvent or suspended in a poor solvent for aluminoxane.

Examples of the organoaluminum compounds used for preparing the aluminoxane include:
trialkylaluminums, such as trimethylaluminum, triethylaluminum, tripropylaluminum, triisopropylaluminum, tri-n-butylaluminum, triisobutylaluminum, tri-sec-butylaluminum, tri-tert-butylaluminum, tripentylaluminum, trihexylaluminum, trioctylaluminum and tridecylaluminum;
tricycloalkylaluminums, such as tricyclohexylaluminum and tricyclooctylaluminum;
dialkylaluminum halides, such as dimethylaluminum chloride, diethylaluminum chloride, diethylaluminum bromide and diisobutylaluminum chloride;
dialkylaluminum hydrides, such as diethylaluminum hydride and diisobutylaluminum hydride;
dialkylaluminum alkoxides, such as dimethylaluminum methoxide and diethylaluminum ethoxide; and
dialkylaluminum aryloxides, such as diethylaluminum phenoxide.

Of these, preferred are trialkylaluminums and tricycloalkylaluminums.

Also employable as the organoaluminum compound used for preparing the aluminoxane is isoprenylaluminum represented by the following formula (II):

(i-C₄-H₉)ₓAl_{y}(C₅-H₁₀)_{z} (II)

wherein x, y, z are each a positive number, and z ≥ 2x.

The organoaluminum compounds mentioned above are used singly or in combination.

Examples of the solvents used for preparing the aluminoxane include aromatic hydrocarbons, such as benzene, toluene, xylene, cumene and cymene; aliphatic hydrocarbons, such as pentane, hexane, heptane, octane, decane, dodecane, hexadecane and octadecane; alicyclic hydrocarbons, such as cyclopentane, cyclohexane, cyclooctane and methylcyclopentane; petroleum fractions, such as gasoline, kerosine and gas oil; and halides of these aromatic, aliphatic and alicyclic hydrocarbons, particularly chlorides and bromides thereof. Also employable are ethers such as ethyl ether and tetrahydrofuran. Of the solvents, particularly preferred are aromatic hydrocarbons.

In the solid catalyst component for forming the olefin polymerization catalyst of the invention, the transition metal compound and the organoaluminum oxy-compound are supported on a fine particle carrier described below.

As the fine particle carrier, an inorganic compound of granular or particulate solid having a diameter of 10 to 300 µm, preferably 20 to 200 µm, is used. The inorganic compound carrier is preferably a porous oxide, and examples thereof include SiO₂, Al₂O₃, MgO, ZrO₂, TiO₂, B₂O₃, CaO, ZnO, BaO, ThO2 and mixtures of these oxides, such as SiO₂-MgO, SiO₂-Al₂O₃, SiO₂-TiO₂, SiO₂-V₂O₅, SiO₂-Cr₂O₃ and SiO₂-TiO₂-MgO. Of these, preferred are compounds containing SiO2 and/or Al₂O₃ as their major ingredient.

The above inorganic oxides may contain components of carbonates, sulfates, nitrates and oxides, such as Na₂CO₃, K₂CO₃, CaCO₃, MgCO₃, Na₂SO₄, Al₂(SO₄)₃, BaSO₄, KNO₃, Mg(NO₃)₂, Al(NO₃)₃, Na₂O, K₂O and Li₂O.

Although the properties of the fine particle carriers vary according to the kind and the process for the preparation thereof, the fine particle carrier preferably used in the invention desirably has a specific surface area of 50 to 1,000 m²/g, preferably 100 to 700 m²/g, and has a pore volume of 0.3 to 2.5 cm³/g. If necessary, the fine particle carrier is calcined at 100 to 1,000 °C, preferably 150 to 700 °C, before use.

Also employable as the fine particle carrier in this invention is an organic compound of granular or particulate solid having a diameter of 10 to 300 µm. Examples of such organic compounds include (co)polymers produced mainly from α-olefins of 2 to 14 carbon atoms such as ethylene, propylene, 1-butene and 4-methyl-1-pentene, and (co)polymers produced mainly from vinylcyclohexane or styrene.

The organoaluminum compound for forming the olefin polymerization catalyst of the invention is, for example, an organoaluminum compound represented by the following formula (III):

R¹⁰ ₙAlX₃₋ₙ (III)

wherein R¹⁰ is a hydrocarbon group of 1 to 12 carbon atoms, X is a halogen atom or hydrogen, and n is 1 to 3.

In the above formula (III), R¹⁰ is a hydrocarbon group of 1 to 12 carbon atoms, e.g., an alkyl group, a cycloalkyl group or an aryl group. Particular examples thereof include methyl, ethyl, n-propyl, isopropyl, isobutyl, pentyl, hexyl, octyl, cyclopentyl, cyclohexyl, phenyl and tolyl.

Examples of such organoaluminum compounds include:
trialkylaluminums, such as trimethylaluminum, triethylaluminum, triisopropylaluminum, triisobutylaluminum, trioctylaluminum, tri-2-ethylhexylaluminum and tridecylaluminum;
alkenylaluminums, such as isoprenylaluminum;
dialkylaluminum halides, such as dimethylaluminum chloride, diethylaluminum chloride, diisopropylaluminum chloride, diisobutylaluminum chloride and dimethylaluminum bromide;
alkylaluminum sesquihalides, such as methylaluminum sesquichloride, ethylaluminum sesquichloride, isopropylaluminum sesquichloride, butylaluminum sesquichloride and ethylaluminum sesquibromide;
alkylaluminum dihalides, such as methylaluminum dichloride, ethylaluminum dichloride, isopropylaluminum dichloride and ethylaluminum dibromide; and
alkylaluminum hydrides, such as diethylaluminum hydride and diisobutylaluminum hydride.

Also employable as the organoaluminum compound is a compound represented by the following formula (IV):

R¹⁰ ₙAlY₃₋ₙ (IV)

wherein R¹⁰ is the same as above, Y is -OR¹¹ group, -OSiR¹²₃ group, -OAlR¹³₂ group, -NR¹⁴₂ group, -SiR¹⁵₃ group or -N(R¹⁶)AlR¹⁷₂ group, n is 1 to 2, R¹¹, R¹², R¹³ and R¹⁷ are each methyl, ethyl, isopropyl, isobutyl, cyclohexyl, phenyl or the like, R¹⁴ is hydrogen, methyl, ethyl, isopropyl, phenyl, trimethylsilyl or the like, and R¹⁵ and R¹⁶ are each methyl, ethyl or the like.

Examples of such organoaluminum compounds include:
(i) compounds of the formula R¹⁰ₙAl(OR¹¹)₃₋ₙ, e.g., dimethylaluminum methoxide, diethylaluminum ethoxide and diisobutylaluminum methoxide;
(ii) compounds of the formula R¹⁰ₙAl(OSiR¹²₃)₃₋ₙ, e.g., Et₂Al(OSiMe₃), (iso-Bu)₂Al(OSiMe₃) and (iso-Bu)₂Al(OSiEt₃);
(iii) compounds of the formula R¹⁰ₙAl(OAlR¹³₂)₃₋ₙ, e.g., Et₂AlOAlEt₂ and (iso-Bu)₂AlOAl(iso-Bu)₂;
(iv) compounds of the formula R¹⁰ₙAl(NR¹⁴₂)₃₋ₙ, e.g., Me₂AlNEt₂, Et₂AlNHMe, Me₂AlNHEt, Et₂AlN(SiMe₃)₂ and (iso-Bu)₂AlN(SiMe₃)₂;
(v) compounds of the formula R¹⁰ₙAl(SiR¹⁵₃)₃₋ₙ, e.g., (iso-Bu)₂AlSiMe₃; and
(vi) compounds of the formula R¹⁰ₙAl(N(R¹⁶)AlR¹⁷₂)₃₋ₙ, e.g., Et₂AlN(Me)AlEt₂ and (iso-Bu)₂AlN(Et)Al(iso-Bu)₂.

Of the organoaluminum compounds represented by the formulas (III) or (IV), preferred are compounds of the formulas R¹⁰₃Al, R¹⁰ₙAl(OR¹¹)₃₋ₙ and R¹⁰ₙAl(OAlR¹³₂)₃₋ₙ, and particularly preferred are compounds of said formulas wherein R¹⁰ is an isoalkyl group and n is 2. The organoaluminum compounds mentioned above may be used in combination of two or more kinds.

The Lewis acid or the ionic compound each containing a boron atom, i.e., boron compound, which is used for forming the olefin polymerization catalyst of the invention, includes compounds described below.

The Lewis acid containing a boron atom is, for example, a compound represented by the following formula (V):

BR₃ (V)

wherein R is a phenyl group which may have a substituent such as fluorine, methyl or trifluoromethyl, or fluorine.

Examples of the compounds represented by the formula (V) include trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron and tris(3,5-dimethylphenyl)boron. Of these, preferred is tris (pentafluorophenyl)boron.

Examples of the ionic compounds containing a boron atom include trialkyl-substituted ammonium salts, N,N-dialkylanilinium salts, dialkylammonium salts and triarylphosphonium salts.

More specifically, there can be exemplified:
trialkyl-substituted ammonium salts, such as triethylammoniumtetra(phenyl)boron, tripropylammoniumtetra(phenyl)boron, tri(n-butyl)ammoniumtetra(phenyl)boron, trimethylammoniumtetra(p-tolyl)boron, trimethylammoniumtetra(o-tolyl)boron, tributylammoniumtetra(pentafluorophenyl)boron, tripropylammoniumtetra(o,p-dimethylphenyl)boron, tributylammoniumtetra(m,m-dimethylphenyl)boron, tributylammoniumtetra(p-trifluoromethylphenyl)boron and tri (n-butyl)ammoniumtetra(o-tolyl)boron;
N,N,-dialkylanilinium salts, such as N,N-dimethylaniliniumtetra(phenyl)boron, N,N-diethylaniliniumtetra(phenyl)boron and N,N-2,4,6-pentamethylaniliniumtetra(phenyl)boron;
dialkylammonium salts, such as di(1-propyl)ammoniumtetra(pentafluorophenyl)boron and dicyclohexylammoniumtetra(phenyl)boron; and
triarylphosphonium salts, such as triphenylphosphoniumtetra(phenyl)boron, tri(methylphenyl)phosphoniumtetra(phenyl)boron and tri(dimethylphenyl)phosphoniumtetra(phenyl)boron.

As the ionic compound containing a boron atom, triphenylcarbeniumtetrakis(pentafluorophenyl)borate, N,N-dimethylaniliniumtetrakis(pentafluorophenyl)borate and ferroceniumtetrakis(pentafluorophenyl)borate are also employable in the invention.

Further, the following compounds can be also exemplified as the ionic compound containing a boron atom. (In the ionic compounds enumerated below, the counter ion is tri(n-butyl)ammonium, but the counter ion is in no way limited thereto.)

That is, there can be mentioned:
salts of anions, such as bis[tri(n-butyl)ammonium]nonaborate, bis[tri(n-butyl)ammonium]decaborate, bis[tri(n-butyl)ammonium]undecaborate, bis[tri(n-butyl)ammonium]dodecaborate, bis[tri(n-butyl)ammonium]decachlorodecaborate, bis[tri(n-butyl)ammonium]dodecachlorododecaborate, tri(n-butyl)ammonium-1-carbadecaborate, tri(n-butyl)ammonium-1-carbaundecaborate, tri(n-butyl)ammonium-1-carbadodecaborate, tri(n-butyl)ammonium-1-trimethylsilyl-1-carbadecaborate and tri(n-butyl)ammoniumbromo-1-carbadodecaborate:
borane and carborane complex compounds and salts of carborane anions, such as decaborane(14), 7,8-dicarbaundecaborane(13), 2,7-dicarbaundecaborane(13), undecahydride-7,8-dimethyl-7,8-dicarbaundecaborane, dodecahydride-11-methyl-2,7-dicarbaundecaborane, tri(n-butyl)ammonium-6-carbadecaborate(14), tri(n-butyl) ammonium-6-carbadecaborate (12), tri (n-butyl)ammonium-7-carbaundecaborate(13), tri (n-butyl)ammonium-7,8-dicarbaundecaborate(12), tri(n-butyl)ammonium-2,9-dicarbaundecaborate(12), tri(n-butyl)ammoniumdodecahydride-8-methyl-7,9-dicarbaundecaborate, tri(n-butyl)ammoniumundecahydride-8-ethyl-7,9-dicarbaundecaborate, tri (n-butyl)ammoniumundecahydride-8-butyl-7,9-dicarbaundecaborate, tri(n-butyl)ammoniumundecahydride-8-allyl-7,9-dicarbaundecaborate, tri(n-butyl)ammoniumundecahydride-9-trimethylsilyl-7,8-dicarbaundecaborate and tri(n-butyl)ammoniumundecahydride-4,6-dibromo-7-carbaundecaborate; and
carboranes and salts of carboranes, such as 4-carbanonaborane(14), 1,3-dicarbanonaborane(13), 6,9-dicarbadecaborane(14), dodecahydride-1-phenyl-1,3-dicarbanonaborane, dodecahydride-1-methyl-1,3-dicarbanonaborane and undecahydride-1,3-dimethyl-1,3-dicarbanonaborane.

Furthermore, the following metallic carborane salts and metallic borane anions can be also exemplified as the compound containing a boron atom. (In the ionic compounds enumerated below, the counter ion is tri(n-butyl)ammonium, but the counter ion is in no way limited thereto.)

That is, there can be mentioned tri(n-butyl)ammoniumbis(nonahydride-1,3-dicarbanonaborate)cobaltate(III), tri(n-butyl) ammoniumbis (undecahydride-7,8-dicarbaundecaborate)ferrate(III), tri(n-butyl)ammoniumbis(undecahydride-7,8-dicarbaundecaborate)cobaltate(III), tri(n-butyl) ammoniumbis (undecahydride-7,8-dicarbaundecaborate)nickelate(III), tri(n-butyl) ammoniumbis (undecahydride-7,8-dicarbaundecaborate)cuprate(III), tri(n-butyl)ammoniumbis(undecahydride-7,8-dicarbaundecaborate)aurate(III), tri(n-butyl)ammoniumbis(nonahydride-7,8-dimethyl-7,8-dicarbaundecaborate)ferrate(III), tri(n-butyl)ammoniumbis(nonahydride-7,8-dimethyl-7,8-dicarbaundecaborate)chromate(III), tri(n-butyl)ammoniumbis(tribromooctahydride-7,8-dicarbaundecaborate)cobaltate(III), tri(n-butyl)ammoniumbis(dodecahydridedicarbadodecaborate)-cobaltate (III), bis[tri(n-butyl)ammonium]bis(dodecahydridedodecaborate)nickelate (III), tris[tri(n-butyl) ammonium]bis (undecahydride-7-carbaundecaborate)chromate(III), bis[tri(n-butyl) ammonium]bis (undecahydride-7-carbaundecaborate) manganate (IV), bis[tri(n-butyl)ammonium]bis(undecahydride-7-carbaundecaborate)cobaltate(III) and bis[tri(n-butyl)ammonium]bis(undecahydride-7-carbaundecaborate)nickelate(IV).

The boron compounds mentioned above may be used in combination of two or more kinds.

The olefin polymerization catalyst according to the invention is an olefin polymerization catalyst obtained by prepolymerizing an olefin in the presence of:
(A) the solid catalyst component obtained by allowing the fine particle carrier to support first the organoaluminum oxy-compound and then the transition metal compound, and
(B) the organoaluminum compound (b-1) and/or the boron compound (b-2).

Fig. 1 is an explanatory view showing steps of a process for preparing the olefin polymerization catalyst according to the invention.

The solid catalyst component (A) can be prepared by, for example, a process comprising the steps of contacting the organoaluminum oxy-compound with the fine particle carrier in an inert hydrocarbon medium to prepare a solid component containing the organoaluminum oxy-compound supported on the fine particle carrier and then contacting the solid component with the transition metal compound in an inert hydrocarbon medium.

Examples of the inert hydrocarbon media used for preparing the solid component and the solid catalyst component include aliphatic hydrocarbons, such as propane, butane, pentane, hexane, heptane, octane, decane, dodecane and kerosine; alicyclic hydrocarbons, such as cyclopentane, cyclohexane and methylcyclopentane; aromatic hydrocarbons, such as benzene, toluene and xylene; halogenated hydrocarbons, such as ethylene chloride, chlorobenzene and dichloromethane; and mixtures of these hydrocarbons.

The inert hydrocarbon medium used for preparing the solid component may be the same as or different from that used for preparing the solid catalyst component.

In the contact of the fine particle carrier with the organoaluminum oxy-compound, the concentration of the organoaluminum oxy-compound is in the range of usually about 0.05 to 2 mol/liter-medium, preferably 0.1 to 0.7 mol/liter-medium, and the organoaluminum oxy-compound is used in an amount of usually 0.001 to 0.015 mol, preferably 0.002 to 0.01 mol, per 1 g of the fine particle carrier.

The temperature for contacting the fine particle carrier with the organoaluminum oxy-compound is in the range of usually -50 to 150 °C, preferably -20 to 120 °C, and the contact time is in the range of 1 minute to 50 hours, preferably 10 minutes to 25 hours.

In the contact of the solid component with the transition metal compound, the transition metal compound is used in such an amount that a ratio of the aluminum atom (Al) in the organoaluminum oxy-compound supported in the solid component to the transition metal atom (M) in the transition metal compound, [Al/M], becomes usually 10 to 2000, preferably 100 to 1000. The contact of the solid component with the transition metal compound may be carried out in the presence of an organoaluminum compound, and in this case, the organoaluminum compound is used in such an amount that an atomic ratio of the aluminum atom (Al₂) in the organoaluminum compound to the aluminum atom (Al₁) in the organoaluminum oxy-compound in the solid component, [Al₂/Al₁], becomes usually 0.02 to 3, preferably 0.05 to 1.5.

The temperature for contacting the solid component with the transition metal compound is in the range of usually -50 to 150 °C, preferably -20 to 120 °C, and the contact time is in the range of 1 minute to 50 hours, preferably 10 minutes to 25 hours.

In the solid catalyst component obtained as above, it is desired that the transition metal compound is supported in an amount of 1 × 10⁻⁷ to 5 × 10⁻³ g·atom, preferably 10⁻⁶ to 5 × 10⁻⁴ g·atom, in terms of the transition metal atom in the transition metal compound, per 1 g of the solid catalyst component, and the organoaluminum oxy-compound is supported in an amount of 1 × 10⁻⁸ to 5 × 10⁻¹ g·atom, preferably 2 × 10⁻⁶ to 2 × 10⁻¹ g·atom, in terms of the aluminum atom in the organoaluminum oxy-compound, per 1 g of the solid catalyst component.

The olefin polymerization catalyst of the invention can be obtained by prepolymerizing an olefin in the presence of:
(A) the solid catalyst component, and
(B) the organoaluminum compound (b-1) and/or the boron compound (b-2).

The prepolymerization can be carried out by introducing an olefin into an inert hydrocarbon medium in the presence of (A) the solid catalyst component and (B) the organoaluminum compound (b-1) and/or the boron compound (b-2).

Examples of the inert hydrocarbon media used herein are identical with those described hereinbefore.

Examples of the olefins used in the prepolymerization include α-olefins of 2 to 20 carbon atoms, such as ethylene, propylene, 1-butene, 1-pentene, 4-methyl-1-pentene, 1-hexene, 1-octene, 1-decene, 1-dodecene and 1-tetradecene. Of these, particularly preferred is the same olefin as used in the polymerization or a combination of ethylene and an α-olefin.

In the prepolymerization, the solid catalyst component is used in such an amount that the concentration of the transition metal compound becomes usually 10⁻⁶ to 2 × 10⁻² mol/liter-medium, preferably 5 × 10⁻⁵ to 10⁻³ mol/liter-medium, and the concentration of the organoaluminum oxy-compound in the solid catalyst component (in terms of the aluminum atom) becomes usually 2 × 10⁻⁴ to 10 mol/liter-medium, preferably 10⁻² to 1 mol/liter-medium.

The organoaluminum compound is used in such an amount that an atomic ratio of the aluminum atom (Al₂) in the organoaluminum compound to the aluminum atom (Al₁) in the organoaluminum oxy-compound in the solid catalyst component, [Al₂/Al₁], becomes usually 0.02 to 3, preferably 0.05 to 1.5.

The boron compound is used in such an amount that a molar ratio of the transition metal compound in the solid catalyst component to the boron compound, [transition metal compound/boron compound], becomes usually 0.01 to 10, preferably 0.5 to 5.

The prepolymerization temperature is in the range of usually -20 to 80 °C, preferably 0 to 60 °C, and the prepolymerization time is in the range of 0.5 to 100 hours, preferably 1 to 50 hours.

It is desired that the amount of an olefin polymer produced by the prepolymerization is in the range of 0.1 to 500 g, preferably 0.2 to 300 g, more preferably 0.5 to 200 g, per 1 g of the solid catalyst component.

In the solid catalyst component (olefin polymerization catalyst) obtained by the prepolymerization, it is desired that the transition metal compound is supported in an amount of about 1 × 10⁻⁷ to 5 × 10⁻³ g·atom, preferably 10⁻⁶ to 5 × 10⁻⁴ g·atom, in terms of the transition metal atom in the transition metal compound, per 1 g of the solid catalyst component, and the organoaluminum oxy-compound is supported in an amount of 1 × 10⁻⁸ to 5 × 10⁻¹ g·atom, preferably 2 × 10⁻⁶ to 2 × 10⁻¹ g·atom, in terms of the aluminum atom in the organoaluminum oxy-compound, per 1 g of the solid catalyst component.

The organoaluminum compound is desirably supported in such an amount that a molar ratio of the aluminum atom in the organoaluminum compound to the transition metal atom (M) in the transition metal compound, [Al/M], is in the range of 10 to 2000, preferably 100 to 1000.

The boron compound is desirably supported in an amount of 5 × 10⁻⁸ to 5 × 10⁻² g·atom, preferably 5 × 10⁻⁷ to 5 × 10⁻³ g·atom, in terms of the boron atom in the boron compound.

The prepolymerization may be carried out batchwise or continuously, and it may be carried out under reduced pressure, atmospheric pressure or pressure.

Examples of the olefins which can be polymerized using the above-mentioned olefin polymerization catalyst include:
α-olefins of 2 to 20 carbon atoms, such as ethylene, propylene, 1-butene, 1-pentene, 3-methyl-1-butene, 1-hexene, 4-methyl-1-pentene, 3-methyl-1-pentene, 1-octene, 1-decene, 1-dodecene, 1-tetradecene, 1-hexadecene, 1-octadecene and 1-eicosene; and
cycloolefins of 3 to 20 carbon atoms, such as cyclopentene, cycloheptene, norbornene, 5-methyl-2-norbornene, tetracyclododecene and 2-methyl-1,4,5,8-dimethano-1,2,3,4,4a,5,8,8a-octahydronaphthalene.

Also employable are styrene, vinylcyclohexane and diene.

In the invention, the polymerization of olefin is carried out either in a gas phase or in a liquid phase such as slurry. In the slurry polymerization, an inert hydrocarbon may be used as a medium or the olefin itself may be used as a medium.

Examples of the inert hydrocarbon media used for the slurry polymerization include aliphatic hydrocarbons, such as butane, isobutane, pentane, hexane, octane, decane, dodecane, hexadecane and octadecane; alicyclic hydrocarbons, such as cyclopentane, methylcyclopentane, cyclohexane and cyclooctane; aromatic hydrocarbons, such as benzene, toluene and xylene; and petroleum fractions, such as gasoline, kerosine and gas oil. Of these, preferred are aliphatic hydrocarbons, alicyclic hydrocarbons and petroleum fractions.

In the slurry polymerization process or the gas phase polymerization process, the olefin polymerization catalyst is desirably used in an amount of usually 10⁻⁸ to 10⁻³ g·atom, preferably 10⁻⁷ to 10⁻⁴ g·atom, in terms of the transition metal atom in the olefin polymerization catalyst, per 1 liter of the polymerization volume.

In the polymerization, an organoaluminum compound similar to that described hereinbefore and/or an organoaluminum oxy-compound similar to that described hereinbefore may be added. In this case, an atomic ratio of the aluminum atom (Al) in both the organoaluminum compound and the organoaluminum oxy-compound to the transition metal atom (M) in the transition metal compound (A), [Al/M], is in the range of 5 to 300, preferably 10 to 200, more preferably 15 to 150.

When the slurry polymerization is applied to the invention, the polymerization temperature is in the range of usually -50 to 100 °C, preferably 0 to 90 °C; and when the gas phase polymerization is applied to the invention, the polymerization temperature is in the range of usually 0 to 120 °C, preferably 20 to 100 °C

The polymerization pressure is in the range of atmospheric pressure to 100 kg/cm², preferably 2 to 50 kg/cm². The polymerization may be carried out batchwise, semi-continuously or continuously.

The polymerization can be conducted in two or more stages having different reaction conditions.

### EFFECT OF THE INVENTION

According to the olefin polymerization catalyst and the process for olefin polymerization of the invention, the amount of the organoaluminum oxy-compound can be reduced, an olefin can be polymerized with high polymerization activity, and a polyolefin of high bulk density can be obtained.

### EXAMPLE

The present invention will be further described with reference to the following examples, but it should be construed that the invention is in no way limited to those examples.

### Example 1

### [Preparation of solid component (a)]

Into a 500-ml reactor thoroughly purged with nitrogen were introduced 25 g of silica (F-948, available from Fuji Divison Co.) having been dried at 200 °C for 4 hours and 310 ml of toluene, and the temperature of the system was set to 0 °C with stirring. To the system was dropwise added 190 mmol (in terms of aluminum atom) of an organoaluminum oxy-compound (methylaluminoxane of Shelling Co. having been diluted with toluene) over a period of 60 minutes in a nitrogen atmosphere. At the same temperature, the reaction was performed for 30 minutes, and then the reaction was continued at 90 °C for another 4 hours. The reaction system was allowed to stand for cooling. When the temperature became 60 °C, the supernatant liquid was removed by decantation, and the remainder was washed three times with 150 ml of toluene at room temperature. As a result, a solid component (a) containing 6.8 mmol of aluminum per 1 g of silica was obtained.

### [Preparation of solid catalyst component (b-1)]

Into a 200-ml reactor thoroughly purged with nitrogen was introduced 50 ml of n-hexane. To the system were added 10.5 mmol (in terms of aluminum atom) of the solid component (a) and 0.03 mmol (in terms of Zr atom) of rac-dimethylsilylenebis{1-(2-methyl-4-phenylindenyl)}zirconium dichloride, and they were stirred for 20 minutes to support the rac-dimethylsilylenebis{1-(2-methyl-4-phenylindenyl)}zirconium dichloride on the solid component (a).

To the reactor was added 100 ml of n-hexane and was further added 0.9 mmol of triisobutylaluminum, and they were stirred for 10 minutes. Then, a propylene gas was fed at a feed rate of 2.2 liter/hour at 20 °C for 2 hours to perform prepolymerization of propylene. The supernatant liquid was removed by decantation, and the remainder was washed three times with 150 ml of decane. As a result, a solid catalyst component (b-1) in which 0.013 mmol of zirconium and 4.57 mmol of aluminum were supported and 3.2 g of prepolymerized polypropylene was contained per 1 g of the solid catalyst component was obtained.

### [Polymerization]

Into a 2-liter stainless steel autoclave thoroughly purged with nitrogen, 750 ml of purified n-hexane was introduced, and it was stirred at 25 °C for 20 minutes in an atmosphere of a mixed gas containing propylene and ethylene (ethylene: 3.6 % by mol). To the reaction system were then added 1.0 mmol of triisobutylaluminum and 0.004 mmol (in terms of zirconium atom) of the solid catalyst component (b-1). The temperature of the system was raised to 50 °C to perform polymerization for 1 hour under the total pressure of 2 kg/cm²-G. After the polymerization, the solvent was removed by filtration, and the remainder was washed with hexane and dried at 80 °C for 10 hours.

Thus, 36.5 g of a polymer (powder) was obtained. The amount of the polymer (SP) dissolved in the solvent was 0.8 g (2.4 % by weight). The polymerization activity was 9.3 kg-polymer/mmol-Zr. The polymer powder had a melt flow rate (MFR) of 20 g/10 min, Mw/Mn of 2.4, an ethylene content of 2.7 % by mol, a melting point of 127 °C and a bulk density of 0.45 g/cm³.

### Example 2

Into a 2-liter autoclave thoroughly purged with nitrogen were introduced 400 g of propylene and 5 liters of ethylene. The temperature of the system was raised to 50 °C. To the system were then added 2.0 mmol of triisobutylaluminum and 0.002 mmol (in terms of zirconium atom) of the solid catalyst component (b-1), to perform polymerization at 60 °C for 1 hour.

Thus, 58 g of a polymer was obtained. The polymerization activity was 29 kg-polymer/mmol-Zr. The polymer had MFR of 17 g/10 min, an ethylene content of 2.2 % by mol, a melting point of 135 °C and a bulk density of 0.40 g/cm³.

### Example 3

### [Preparation of solid catalyst component (b-2)]

Into a 200-ml reactor thoroughly purged with nitrogen was introduced 50 ml of n-hexane. To the system were then added 10.5 mmol (in terms of aluminum atom) of the solid component (a) and 0.03 mmol (in terms of Zr atom) of rac-dimethylsilylenebis[1-(2-n-propyl-4-(9-phenanthryl)indenyl}]zirconium dichloride, and they. were stirred for 20 minutes to support the rac-dimethylsilylenebis[1-{2-n-propyl-4-(9-phenanthryl)indenyl}]zirconium dichloride on the solid component (a).

To the reactor was added 100 ml of n-hexane and was further added 0.9 mmol of triisobutylaluminum, and they were stirred for 10 minutes. Then, a propylene gas was fed at a feed rate of 2.2 liter/hour at 20 °C for 2 hours to perform prepolymerization of propylene. The supernatant liquid was removed by decantation, and the remainder was washed three times with 150 ml of decane. As a result, a solid catalyst component (b-2) in which 0.012 mmol of zirconium and 4.48 mmol of aluminum were supported and 3.1 g of prepolymerized polypropylene was contained per 1 g of the solid catalyst component was obtained.

### [Polymerization]

Into a 2-liter stainless steel autoclave thoroughly purged with nitrogen, 750 ml of purified n-hexane was introduced, and it was stirred at 25 °C for 20 minutes in an atmosphere of a mixed gas containing propylene and ethylene (ethylene: 3.6 % by mol). To the reaction system were then added 1.0 mmol of triisobutylaluminum and 0.004 mmol (in terms of zirconium atom) of the solid catalyst component (b-2). The temperature of the system was raised to 50 °C to perform polymerization for 1 hour under the total pressure of 2 kg/cm²-G. After the polymerization, the solvent was removed by filtration, and the remainder was washed with hexane and dried at 80 °C for 10 hours.

Thus, 25.8 g of a polymer (powder) was obtained. The amount of the polymer (SP) dissolved in the solvent was 0.5 g (1.9 % by weight). The polymerization activity was 6.6 kg-polymer/mmol-Zr. The polymer powder had MFR of 0.9 g/10 min, Mw/Mn of 2.3, an ethylene content of 2.4 % by mol, a melting point of 129 °C and a bulk density of 0.43 g/cm³.

### Example 4

### [Polymerization]

Into a 2-liter autoclave thoroughly purged with nitrogen were introduced 400 g of propylene and 5 liters of ethylene. The temperature of the system was raised to 50 °C. To the system were then added 2.0 mmol of triisobutylaluminum and 0.004 mmol (in terms of zirconium atom) of the solid catalyst component (b-2), to perform polymerization at 60 °C for 1 hour.

Thus, 77.2 g of a polymer was obtained. The polymerization activity was 19.3 kg-polymer/mmol-Zr. The polymer had MFR of 1.5 g/10 min, a melting point of 136 °C and a bulk density of 0.42 g/cm³.

### Example 5

### [Preparation of solid catalyst component (b-3)]

A solid catalyst component (b-3) was prepared in the same manner as for preparing the solid catalyst component (b-1) in Example 1 except that rac-dimethylsilylenebis{1-(2,7-dimethyl-4-isopropylindenyl)}zirconium dichloride was used as the transition metal compound. As a result, a solid catalyst component (b-3) in which 0.011 mmol of zirconium and 4.48 mmol of aluminum were supported and 3.2 g of prepolymerized polypropylene was contained per 1 g of the solid catalyst component was obtained.

### [Polymerization]

Polymerization of propylene and ethylene was carried out in the same manner as in Example 1 except that 0.002 mmol (in terms of zirconium atom) of the solid catalyst component (b-3) was used as the solid catalyst component.

Thus, 75 g of a polymer (powder) was obtained. The amount of the polymer (SP) dissolved in the solvent was 1.9 g (2.5 % by weight). The polymerization activity was 38.5 kg-polymer/mmol-Zr. The polymer powder had MFR of 6.0 g/10 min, Mw/Mn of 2.6, an ethylene content of 2.9 % by mol, a melting point of 126 °C and a bulk density of 0.44 g/cm³.

### Example 6

Polymerization of propylene and ethylene was carried out in the same manner as in Example 2 except that the solid catalyst component (b-3) was used as the solid catalyst component.

Thus, 138 g of a polymer was obtained. The polymerization activity was 69.0 kg-polymer/mmol-Zr. The polymer had MFR of 4.8 g/10 min, a melting point of 132 °C and a bulk density of 0.42 g/cm³.

### Example 7

### [Preparation of solid catalyst component (b-4)]

A solid catalyst component (b-4) was prepared in the same manner as for preparing the solid catalyst component (b-2) in Example 3 except that rac-diphenylsilylenebis{1-(2,7-dimethyl-4-isopropylindenyl)}zirconium dichloride was used as the transition metal compound. As a result, a solid catalyst component (b-4) in which 0.011 mmol of zirconium and 4.55 mmol of aluminum were supported and 3.0 g of prepolymerized polypropylene was contained per 1 g of the solid catalyst component was obtained.

### [Polymerization]

Polymerization of propylene and ethylene was carried out in the same manner as in Example 3 except that 0.002 mmol (in terms of zirconium atom) of the solid catalyst component (b-4) was used as the solid catalyst component.

Thus, 59 g of a polymer (powder) was obtained. The amount of the polymer (SP) dissolved in the solvent was 2.5 g (4.0 % by weight). The polymerization activity was 30.7 kg-polymer/mmol-Zr. The polymer powder had MFR of 5.8 g/10 min, Mw/Mn of 2.6, an ethylene content of 3.0 % by mol, a melting point of 127 °C and a bulk density of 0.43 g/cm³.

### Example 8

Polymerization of propylene and ethylene was carried out in the same manner as in Example 4 except that 0.002 mmol (in terms of zirconium atom) of the solid catalyst component (b-4) was used as the solid catalyst component.

Thus, 102 g of a polymer was obtained. The polymerization activity was 51 kg-polymer/mmol-Zr. The polymer had MFR of 4.8 g/10 min, a melting point of 134 °C and a bulk density of 0.41 g/cm³.

## Claims

1. An olefin polymerization catalyst obtained by prepolymerizing an olefin in the presence of:
(A) a solid catalyst component obtained by allowing an inorganic fine particle carrier to support first an organoaluminum oxy-compound and then a transition metal compound represented by the following formula (I), and
(B) (b-1) an organoaluminum compound and/or (b-2) Lewis acid containing a boron atom or an ionic compound containing a boron atom; 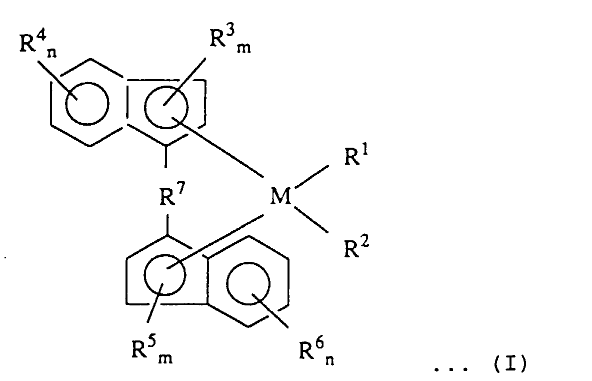
wherein M is a transition metal of Group IVB of the periodic table;
R¹ and R² are each a group or an atom selected from a hydrocarbon group of 1 to 10 carbon atoms, an alkoxy group of 1 to 10 carbon atoms, an aryloxy group of 6 to 10 carbon atoms, -OSO₂R⁸, -SO₂R⁸, -CH₂SiR⁸₃ (R⁸ is a hydrocarbon group which may have a substituent), a hydrogen atom and a halogen atom, and may be the same as or different from each other;
R³ and R⁵ are each a group selected from a hydrocarbon group of 1 to 10 carbon atoms and a trialkylsilyl group whose alkyl group has 1 to 10 carbon atoms, and may be the same as or different from each other, and m is 1 or 2;
R⁴ and R⁶ are each a group selected from a hydrocarbon group of 1 to 10 carbon atoms, a trialkylsilyl group whose alkyl group has 1 to 10 carbon atoms and an aryl group of 6 to 16 carbon atoms which may be substituted with a hydrocarbon group of 1 to 20 carbon atoms, a halogenated hydrocarbon group of 1 to 20 carbon atoms, a trialkylsilyl group or a halogen atom, n is 0 or an integer of 1 to 4, and when n is an integer of 2 to 4, plural different R⁴ and/or plural different R⁶, which are bonded to adjacent carbon atoms, may be bonded to each other to form a ring together with the carbon atoms; and
R⁷ is a group selected from a silylene group, a substituted silylene group, -GeR⁹₂- and PR⁹- (R⁹ is a hydrocarbon group).

2. The olefin polymerization catalyst as claimed in claim 1, wherein R⁷ is a silylene group or substituted silylene group.

3. A process for olefin polymerization, comprising polymerizing or copolymerizing an olefin in the presence of an olefin polymerization catalyst which is obtained by prepolymerizing an olefin in the presence of:
(A) a solid catalyst component obtained by allowing an inorganic fine particle carrier to support first an organoaluminum oxy-compound and then a transition metal compound represented by the following formula (I), and
(B) (b-1) an organoaluminum compound and/or (b-2) Lewis acid containing a boron atom or an ionic compound containing a boron atom; 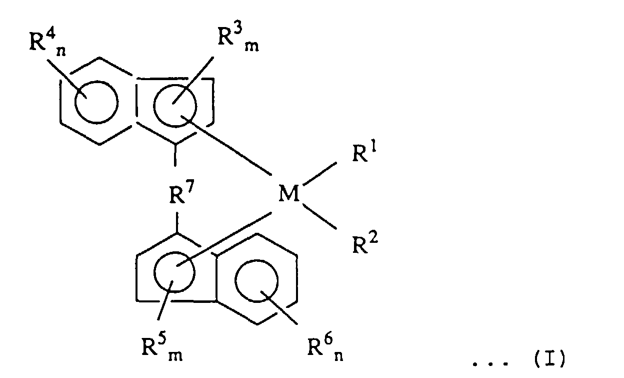
wherein M is a transition metal of Group IVB of the periodic table;
R¹ and R² are each a group or an atom selected from a hydrocarbon group of 1 to 10 carbon atoms, an alkoxy group of 1 to 10 carbon atoms, an aryloxy group of 6 to 10 carbon atoms, -OSO₂R⁸, -SO₂R⁸, -CH₂SiR⁸₃ (R⁸ is a hydrocarbon group which may have a substituent), a hydrogen atom and a halogen atom, and may be the same as or different from each other;
R³ and R⁵ are each a group selected from a hydrocarbon group of 1 to 10 carbon atoms and a trialkylsilyl group whose alkyl group has 1 to 10 carbon atoms, and may be the same as or different from each other, and m is 1 or 2;
R⁴ and R⁶ are each a group selected from a hydrocarbon group of 1 to 10 carbon atoms, a trialkylsilyl group whose alkyl group has 1 to 10 carbon atoms and an aryl group of 6 to 16 carbon atoms which may be substituted with a hydrocarbon group of 1 to 20 carbon atoms, a halogenated hydrocarbon group of 1 to 20 carbon atoms, a trialkylsilyl group or a halogen atom, n is 0 or an integer of 1 to 4, and when n is an integer of 2 to 4, plural different R⁴ and/or plural different R⁶, which are bonded to adjacent carbon atoms, may be bonded to each other to form a ring together with the carbon atoms; and
R⁷ is a group selected from a silylene group, a substituted silylene group, -GeR⁹₂- and PR⁹- (R⁹ is a hydrocarbon group).

4. The process as claimed in claim 3 wherein R⁷ is a silylene group or substituted silylene group.

## Patentansprüche

1. Katalysator zur Olefinpolymerisation, erhalten durch Präpolymerisierung eines Olefins in Anwesenheit von:
(A) einer festen Katalysatorkomponente, erhalten durch Auftragen einer ersten Organoaluminiumoxyverbindung und anschliessend einer Übergangsmetallverbindung, dargestellt durch die folgende Formel (I), auf einen anorganischen Feinpartikelträger und
(B) (b-1) einer Organoaluminiumverbindung und/oder (b-2) Lewis-Säure, enthaltend ein Boratom oder eine ionische Verbindung, enthaltend ein Boratom; 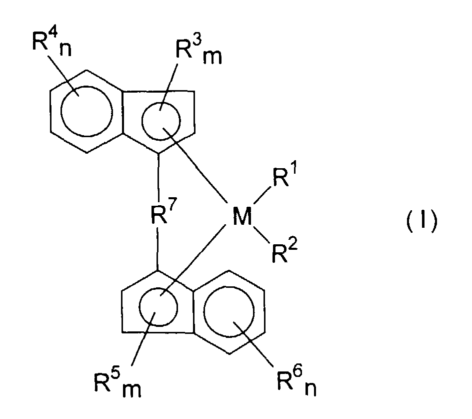
worin M ein Übergangsmetall der Gruppe IVB des Periodensystems ist;
R¹ und R² sind jeweils eine Gruppe oder ein Atom, ausgewählt aus einer Kohlenwasserstoffgruppe mit 1 bis 10 Kohlenstoffatomen, einer Alkoxygruppe mit 1 bis 10 Kohlenstoffatomen, einer Aryloxygruppe mit 6 bis 10 Kohlenstoffatomen, -OSO₂R⁸, -SO₂R⁸, -CH₂SiR⁸₃ (R⁸ ist eine Kohlenwasserstoffgruppe, die substituiert sein kann), einem Wasserstoffatom und einem Halogenatom, und gleich oder verschieden voneinander sein können;
R³ und R⁵ sind jeweils eine Gruppe, ausgewählt aus einer Kohlenwasserstoffgruppe mit 1 bis 10 Kohlenstoffatomen und einer Trialkylsilylgruppe, deren Alkylgruppe 1 bis 10 Kohlenstoffatome hat, und gleich oder verschieden voneinander sein können, und m ist 1 oder 2;
R⁴ und R⁶ sind jeweils eine Gruppe, ausgewählt aus einer Kohlenwasserstoffgruppe mit 1 bis 10 Kohlenstoffatomen, einer Trialkylsilylgruppe, deren Alkylgruppe 1 bis 10 Kohlenstoffatome hat, und einer Arylgruppe mit 6 bis 16 Kohlenstoffatomen, die mit einer Kohlenwasserstoffgruppe mit 1 bis 20 Kohlenstoffatomen, einer halogenierten Kohlenwasserstoffgruppe mit 1 bis 20 Kohlenstoffatomen, einer Trialkylsilylgruppe oder einem Halogenatom substituiert sein kann, n ist 0 oder eine ganze Zahl von 1 bis 4, und wenn n eine ganze Zahl von 2 bis 4 ist, können mehrere verschiedene R⁴ und/oder mehrere verschiedene R⁶, die an benachbarte Kohlenstoffatome gebunden sind, miteinander verbunden sein, um zusammen mit diesen Kohlenstofftatomen einen Ring zu bilden; und
R⁷ ist eine Gruppe, ausgewählt aus einer Silylengruppe, einer substituierten Silylengruppe, -GeR⁹₂- und PR⁹- (R⁹ ist eine Kohlenwasserstoffgruppe).

2. Katalysator zur Olefinpolymerisation gemäss Anspruch 1, wobei R⁷ eine Silylengruppe oder eine substituierte Silylengruppe ist.

3. Verfahren zur Olefinpolymerisation, umfassend Polymerisieren oder Copolymerisieren eines Olefins in Anwesenheit eines Katalysators zur Olefinpolymerisation, der erhalten werden kann durch Präpolymerisation eines Olefins in Anwesenheit von:
(A) einer festen Katalysatorkomponente, erhalten durch Auftragen einer ersten Organoaluminiumoxyverbindung und anschliessend einer Übergangsmetallverbindung, dargestellt durch die folgende Formel (I), auf einen anorganischen Feinpartikelträger und
(B) (b-1) einer Organoaluminiumverbindung und/oder (b-2) Lewis-Säure, enthaltend ein Boratom oder eine ionische Verbindung, enthaltend ein Boratom; 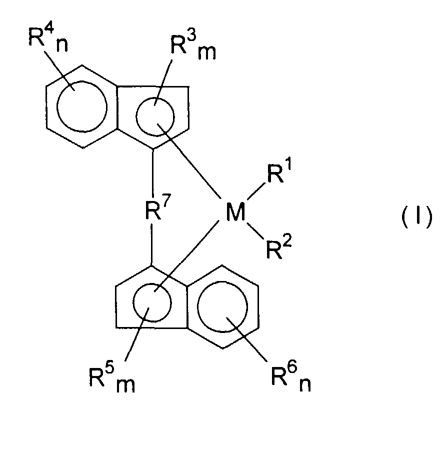
worin M ein Übergangsmetall der Gruppe IVB des Periodensystems ist;
R¹ und R² sind jeweils eine Gruppe oder ein Atom, ausgewählt aus einer Kohlenwasserstoffgruppe mit 1 bis 10 Kohlenstoffatomen, einer Alkoxygruppe mit 1 bis 10 Kohlenstoffatomen, einer Aryloxygruppe mit 6 bis 10 Kohlenstoffatomen, -OSO₂R⁸, -SO₂R⁸, -CH₂SiR⁸₃ (R⁸ ist eine Kohlenwasserstoffgruppe, die substituiert sein kann), einem Wasserstoffatom und einem Halogenatom, und gleich oder verschieden voneinander sein können;
R³ und R⁵ sind jeweils eine Gruppe, ausgewählt aus einer Kohlenwasserstoffgruppe mit 1 bis 10 Kohlenstoffatomen und einer Trialkylsilylgruppe, deren Alkylgruppe 1 bis 10 Kohlenstoffatome hat, und gleich oder verschieden voneinander sein können, und m ist 1 oder 2;
R⁴ und R⁶ sind jeweils eine Gruppe, ausgewählt aus einer Kohlenwasserstoffgruppe mit 1 bis 10 Kohlenstoffatomen, einer Trialkylsilylgruppe, deren Alkylgruppe 1 bis 10 Kohlenstoffatome hat, und einer Arylgruppe mit 6 bis 16 Kohlenstoffatomen, die mit einer Kohlenwasserstoffgruppe mit 1 bis 20 Kohlenstoffatomen, einer halogenierten Kohlenwasserstoffgruppe mit 1 bis 20 Kohlenstoffatomen, einer Trialkylsilylgruppe oder einem Halogenatom substituiert sein kann, n ist 0 oder eine ganze Zahl von 1 bis 4, und wenn n eine ganze Zahl von 2 bis 4 ist, können mehrere verschiedene R⁴ und/oder mehrere verschiedene R⁶, die an benachbarte Kohlenstoffatome gebunden sind, miteinander verbunden sein, um zusammen mit diesen Kohlenstofftatomen einen Ring zu bilden; und
R⁷ ist eine Gruppe, ausgewählt aus einer Silylengruppe, einer substituierten Silylengruppe, -GeR⁹₂- und PR⁹- (R⁹ ist eine Kohlenwasserstoffgruppe).

4. Verfahren gemäss Anspruch 3, worin R⁷ eine Silylengruppe oder eine substituierte Silylengruppe ist.

## Revendications

1. Catalyseur de polymérisation d'oléfine obtenu en prépolymérisant une oléfine en présence de :
(A) un composant de catalyseur solide obtenu en faisant supporter par un support inorganique en fines particules tout d'abord un composé organooxyaluminique et ensuite un composé de métal de transition représenté par la formule suivante (I), et
(B) (b-1) un composé organoaluminique et/ou (b-2) un acide de Lewis contenant un atome de bore ou un composé ionique contenant un atome de bore, 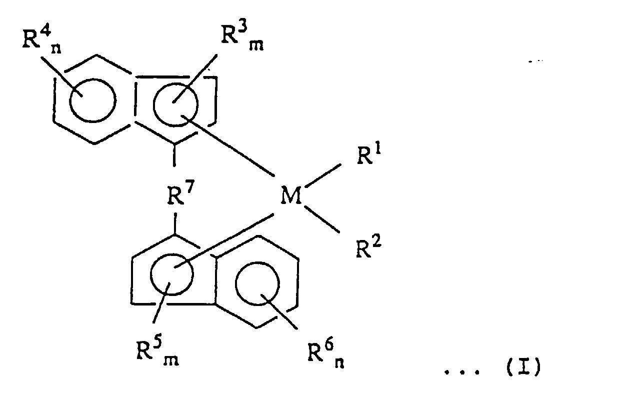
où M est un métal de transition du groupe IVB du tableau périodique,
R¹ et R² sont chacun un groupement ou un atome choisi parmi un groupement hydrocarbure de 1 à 10 atomes de carbone, un groupement alcoxy de 1 à 10 atomes de carbone, un groupement aryloxy de 6 à 10 atomes de carbone, -OSO₂R⁸, -SO₂R⁸, -CH₂SiR⁸₃ (R⁸ est un groupement hydrocarbure qui peut comporter un substituant), un atome d'hydrogène et un atome d'halogène, et peuvent être identiques ou différents l'un de l'autre,
R³ et R⁵ sont chacun un groupement choisi parmi un groupement hydrocarbure de 1 à 10 atomes de carbone et un groupement trialkylsilyle dont le groupement alkyle comporte de 1 à 10 atomes de carbone, et peuvent être identiques ou différents l'un de l'autre, et m est 1 ou 2,
R⁴ et R⁶ sont chacun un groupement choisi parmi un groupement hydrocarbure de 1 à 10 atomes de carbone, un groupement trialkylsilyle dont le groupement alkyle comporte de 1 à 10 atomes de carbone et un groupement aryle de 6 à 16 atomes de carbone qui peut être substitué par un groupement hydrocarbure de 1 à 20 atomes de carbone, un groupement hydrocarbure halogéné de 1 à 20 atomes de carbone, un groupement trialkylsilyle ou un atome d'halogène, n est 0 ou un nombre entier de 1 à 4, et lorsque n est un nombre entier de 2 à 4, plusieurs R⁴ différents et/ou plusieurs R⁶ différents, qui sont liés à des atomes de carbone adjacents, peuvent être liés les uns aux autres afin de former un cycle en association avec les atomes de carbone, et
R⁷ est un groupement choisi parmi un groupement silylène, un groupement silylène substitué, -GeR⁹₂- et PR⁹- (R⁹ est un groupement hydrocarbure).

2. Catalyseur de polymérisation d'oléfine selon la revendication 1, dans lequel R⁷ est un groupement silylène ou un groupement silylène substitué.

3. Procédé de polymérisation d'oléfine, comprenant la polymérisation ou la copolymérisation d'une oléfine en présence d'un catalyseur de polymérisation d'oléfine qui est obtenu en prépolymérisant une oléfine en présence de :
(A) un composant de catalyseur solide obtenu en faisant supporter par un support inorganique en fines particules tout d'abord un composé organooxyaluminique et ensuite un composé de métal de transition représenté par la formule suivante (I), et
(B) (b-1) un composé organoaluminique et/ou (b-2) un acide de Lewis contenant un atome de bore ou un composé ionique contenant un atome de bore, 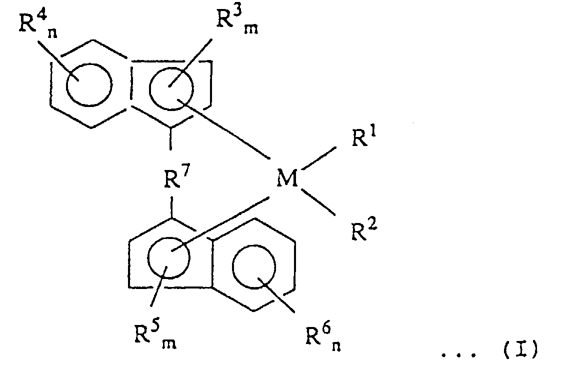
dans laquelle M est un métal de transition du groupe IVB du tableau périodique,
R¹ et R² sont chacun un groupement ou un atome choisi parmi un groupement hydrocarbure de 1 à 10 atomes de carbone, un groupement alcoxy de 1 à 10 atomes de carbone, un groupement aryloxy de 6 à 10 atomes de carbone, -OSO₂R⁸, -SO₂R⁸, -CH₂SiR⁸₃ (R⁸ est un groupement hydrocarbure qui peut comporter un substituant), un atome d'hydrogène et un atome d'halogène, et peuvent être identiques ou différents l'un de l'autre,
R³ et R⁵ sont chacun un groupement choisi parmi un groupement hydrocarbure de 1 à 10 atomes de carbone et un groupement trialkylsilyle dont le groupement alkyle comporte de 1 à 10 atomes de carbone, et peuvent être identiques ou différents l'un de l'autre, et m est 1 ou 2,
R⁴ et R⁶ sont chacun un groupement choisi parmi un groupement hydrocarbure de 1 à 10 atomes de carbone, un groupement trialkylsilyle dont le groupement alkyle comporte de 1 à 10 atomes de carbone et un groupement aryle de 6 à 16 atomes de carbone qui peut être substitué par un groupement hydrocarbure de 1 à 20 atomes de carbone, un groupement hydrocarbure halogéné de 1 à 20 atomes de carbone, un groupement trialkylsilyle ou un atome d'halogène, n est 0 ou un nombre entier de 1 à 4, et lorsque n est un nombre entier de 2 à 4, plusieurs R⁴ différents et/ou plusieurs R⁶ différents, qui sont liés à des atomes de carbone adjacents, peuvent être liés les uns aux autres afin de former un cycle en association avec les atomes de carbone, et
R⁷ est un groupement choisi parmi un groupement silylène, un groupement silylène substitué, -GeR⁹₂- et PR⁹- (R⁹ est un groupement hydrocarbure).

4. Procédé selon la revendication 3, dans lequel R¹ est un groupement silylène ou un groupement silylène substitué.
